# EUROPÄISCHE PATENTSCHRIFT

(11) **EP 0 526 724 B1**
(45) Veröffentlichungstag und Bekanntmachung des Hinweises auf die Patenterteilung: **04.05.1994**
(21) Anmeldenummer: 92110537.5
(22) Anmeldetag: 23.06.1992
(51) Int. Cl.: B60K 26/04, G05G 23/00

(54) **Anordnung zur Einstellung der Vollaststellung einer Drosselklappe**
Arrangement for adjusting the full-charge position of a throttle valve
Arrangement pour ajuster la position de pleine charge d'un clapet d'étranglement

(30) Priorität: 07.08.1991 DE 4126115
(43) Veröffentlichungstag der Anmeldung: 10.02.1993
(73) Patentinhaber: MERCEDES-BENZ AG, 70327 Stuttgart (DE)
(72) Erfinder: Blass, Josef, W-7073 Lorch (DE); Bellinger, Knut, W-7448 Wolfschlugen (DE)

(56) Entgegenhaltungen:
- EP-A- 0 251 582
- DE-A- 3 924 533
- US-A- 4 146 115

## Beschreibung

### Anordnung zur Einstellung der Vollaststellung einer Drosselklappe

Die Erfindung bezieht sich auf eine Anordnung zur Einstellung der Vollaststellung einer Drosselklappe gemäß den im Oberbegriff des Patentanspruchs 1 angegebenen Merkmalen.

Eine derartige Anordnung ist aus der DE 39 24 533 A1 bekannt. Bei dieser bekannten Anordnung wird das Ende der Ummantelung eines Kabelzuges gegenüber einer festen Abstützung längsverschoben, so daß sich die Länge des Kabelzuges ändert. Dazu ist das manuelle Lösen einer Sicherung der Raste notwendig, wozu eine gesonderte Person erforderlich ist und was wegen der oft vorhandenen Unzugänglichkeit, beispielsweise im Motorraum eines Kraftfahrzeuges, schwierig zu verwirklichen ist.

Eine ähnliche Anordnung ist aus der EP 0 251 582 A1 bekannt. Bei dieser bekannten Anordnung wird zur Einstellung auf das Fahrpedal eine weit über die übliche Betätigungskraft hinausgehende Kraft ausgeübt, die einen mit Rippen versehenen Abschnitt der Ummantelung innerhalb einer Abstützung längsverschiebt. Da im Kabelzug Elastizitäten vorhanden sind, ist nicht sichergestellt, daß auch bei der Betätigung der Übertragungseinrichtung mit der üblichen Betätigungskraft die Vollastanschläge richtig eingestellt sind. Auch bei dieser Anordnung ist die Anbringung einer Sicherung an einer schwer zugänglichen Stelle notwendig.

Der Erfindung liegt die Aufgabe zugrunde, eine Anordnung zu schaffen, die eine genaue Vollasteinstellung ermöglicht, die von einer einzelnen Person vorgenommen werden kann und Tätigkeiten an schwer zugänglichen Stellen vermeidet.

Diese Aufgabe wird erfindungsgemäß durch die kennzeichnenden Merkmale des Patentanspruchs 1 gelöst.

Bei der erfindungsgemäß ausgebildeten Anordnung erfolgt die Vollasteinstellung durch einfaches Verstellen eines Klipses am Fahrhebel beispielsweise am im allgemeinen gut zugänglichen Fahrpedal innerhalb eines Kraftfahrzeuges, wobei keine höheren Kräfte als bei der üblichen Betätigung des Fahrpedals aufgebracht werden müssen und die bei der Einstellung notwendige Verstellung des Fahrpedals in Vollaststellung von derselben Person, die auch die Verstellung des Klipses ausführt, vorgenommen werden kann.

Diese Ausgestaltung nach dem Patentanspruch 2 erleichtert zusätzlich die Aufbringung der Einstellkraft.

Durch die Ausgestaltung nach dem Patentanspruch 3 wird die für die Verstellung aufzubringende Kraft weiter verringert, ohne daß die Rastwirkung zwischen den Zähnen der Ausnehmung und des Klipses verkleinert wird.

Im Patentanspruch 4 ist eine hinsichtlich der Einrastung der Verzahnungen und Gegenverzahnungen sowie der Aufhebung der Verrastung besonders wirksame Ausbildung des Klipses angegeben.

Der Gegenstand des Patentanspruchs 5 stellt eine wirksame Sicherung gegen eine unbeabsichtigte Verstellung der Vollasteinstellung dar, ohne daß eine beabsichtigte Verstellung nach einem einfachen Aufheben der Sicherung ausgeschlossen ist.

In den Patentansprüchen 6 und 7 sind einfach herzustellende Sicherungen gegen ein Herausgleiten des Klipses aus der Ausnehmung nach oben angegeben, wobei beim Gegenstand des Patentanspruchs 7 eine bereits vorhandene Feder benutzt werden kann.

Im folgenden wird die Erfindung anhand eines in der Zeichnung dargestellten Ausführungsbeispiels näher erläutert. Dabei zeigt:
- Fig. 1: eine Übertragungseinrichtung für die Verstellung einer Drosselklappe einer in ein Kraftfahrzeug eingebauten Brennkraftmaschine,

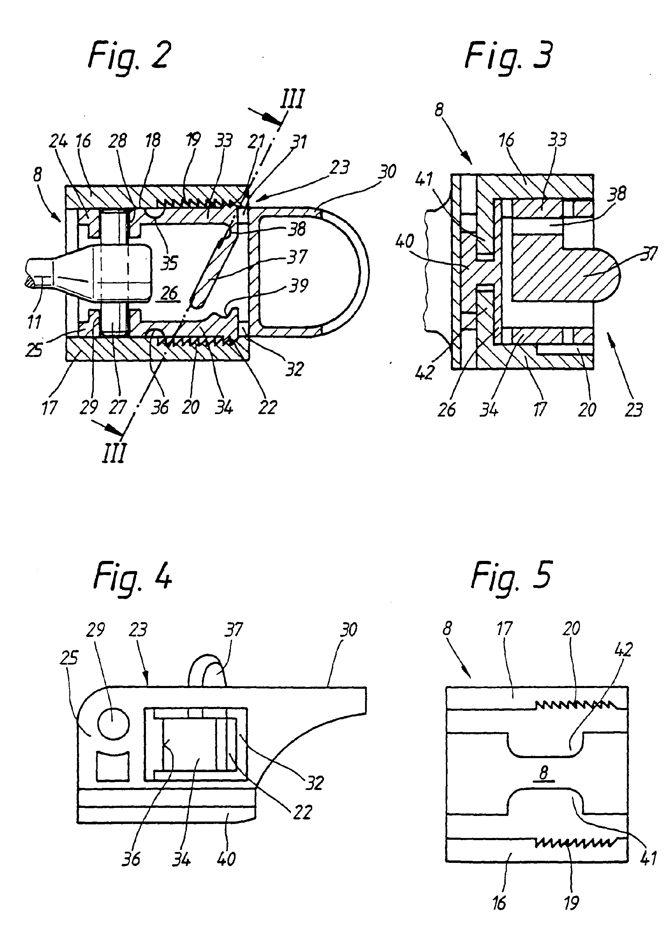

- Fig. 2: eine Anordnung zur Vollasteinstellung zwischen einem Fahrpedal und einem Kabelzug der Übertragungseinrichtung der Fig. 1 in größerem Maßstab im Horizontalschnitt,
- Fig. 3: einen Schrägschnitt durch die Anordnung nach der Linie III-III der Fig. 2,
- Fig. 4: einen Klips als Teil der Anordnung in Seitenansicht und
- Fig. 5: eine Draufsicht auf das obere Fahrhebelende.

Die Übertragungseinrichtung zur Betätigung einer Drosselklappe 1 in einem Luftzufuhrkanal 2 einer Brennkraftmaschine, die beispielsweise ein Kraftfahrzeug antreibt, besteht im wesentlichen aus einem Fahrpedal 3, einem Kabelzug 4 und einem Betätigungshebel 5 an einer die Drosselklappe 1 tragenden Welle 6. Das Fahrpedal 3 setzt sich aus einer Pedalplatte 7 und einem Fahrhebel 8 zusammen, der etwa mittig abgewinkelt ist und dort an einer den Fußraum 9 des Kraftfahrzeuges begrenzenden Spritzwand 10 gelagert ist. Das von dieser wegragende untere Hebelende trägt die Pedalplatte 7, während das andere, nach oben ragende Hebelende mit einer Drahtseele 11 des Kabelzuges 4 verbunden ist, die an ihrem anderen Ende mit dem Betätigungshebel 5 verbunden ist. Eine Ummantelung 12 des Kabelzuges 4 stützt sich mit ihren beiden Enden einerseits an der Spritzwand 10 und andererseits an einem weiteren Karosserieteil 13 des Kraftfahrzeuges ab.

Bei Erreichen der Vollaststellung der Drosselklappe 1 legt sich der Betätigungshebel 5 an einen Vollastanschlag 14 an, gleichzeitig soll der Fahrhebel 8 einen weiteren Vollastanschlag 15 erreichen, um einerseits eine Überbeanspruchung der Übertragungseinrichtung zu vermeiden und andererseits ein volles Öffnen der Drosselklappe 1 zu gewährleisten. Dazu muß die wirksame Länge der Übertragungseinrichtung verstellbar sein. Dies erfolgt nach der erfindungsgemäßen Anordnung durch eine verstellbare Verbindung der Drahtseele 11 mit dem Fahrhebel 8. Dazu ist dessen oberes Ende etwa U-förmig ausgebildet mit seitlichen Schenkeln 16, 17, die sich hauptsächlich nach oben und in Bewegungsrichtung des Fahrhebels 8 erstrecken und eine Ausnehmung 18 begrenzen, die nach oben und in Bewegungsrichtung des Fahrhebels 8 vorne und hinten offen ist.

Die beiden Schenkel 16, 17 tragen auf ihren zur Ausnehmung 18 gerichteten Innenseiten Verzahnungen 19, 20, die im Ausführungsbeispiel als Zahnreihen ausgebildet sind. Grundsätzlich sind aber bei entsprechender Gegenverzahnung 21, 22 ein einziger Zahn je Verzahnung und/oder eine Verzahnung 19 oder 20 an nur einem Schenkel ausreichend.

Die Gegenverzahnungen 21, 22 sind seitlich an einem Klips 23 angebracht, der in die Ausnehmung 18 eingesetzt und in diesem längsverschiebbar und feststellbar ist. Er besteht im wesentlichen aus zwei Seitenwänden 24, 25 und einem Boden 26. In seinem einen Endbereich ist ein Bolzen 27 in Bohrungen 28, 29 in den Seitenwänden 24, 25 eingesetzt, an dem die Drahtseele 11 des Kabelzuges 4 befestigt ist. Am anderen Ende des Klipses 23 ist ein Ring 30 ausgebildet, der über eine tiefe Basis mit dem übrigen Klips 23 verbunden ist. Bei einem Zug am Ring 30, beispielsweise mittels eines Fingers, kann auf den Klips 23 und die Drahtseele 11 eine Zugkraft ausgeübt werden. Wird nun bei am Vollastanschlag 15 anliegendem Fahrhebel 8 ein Zug am Ring 30 ausgeübt, so wird der Klips 23 in der Ausnehmung 18 längsverschoben und der Hebel 5 soweit verdreht, daß er an seinem Vollastanschlag 14 anliegt. Nach einer Feststellung des Klipses 23 in der Ausnehmung 18, die im folgenden näher beschrieben wird, ist sichergestellt, daß der Betätigungshebel 5 und der Fahrhebel 8 gleichzeitig ihre Vollaststellungen erreichen mit den oben angegebenen Vorteilen.

In jeder Seitenwand 24,25 des Klipses 23 ist eine Aussparung 31, 32 vorgesehen, in die eine Klappe 33, 34 eingesetzt ist, die an ihrer den Bohrungen 28, 29 nahen Seite mittels eines Filmscharniers 35, 36 an einer Seitenwand 24, 25 schwenkbar befestigt ist. Im vom Filmscharnier 35, 36 entfernten Bereich ragen von jeder Klappe 33, 34 zwei Zähne nach außen, die die Gegenverzahnungen 21, 22 zu den Verzahnungen 19, 20 bilden. Bei entsprechender Gestaltung dieser Verzahnungen 19, 20 ist auch jede andere Anzahl an Zähnen der Gegenverzahnungen 21, 22 und/oder die Anordnung nur einer Klappe 33, 34 möglich. Die beidseitige Ausbildung mit einer größeren Anzahl an Zähnen bei den Verzahnungen 19, 20 und zwei Zähnen bei jeder Gegenverzahnung 21, 22 stellt jedoch eine preisgünstige und sichere Lösung dar.

Die Zähne sowohl der Verzahnungen 19, 20 wie der Gegenverzahnungen 21, 22 sind asymmetrisch ausgebildet. Die dem Ring 30 zugewandten Zahnflanken der Gegenverzahnungen 21, 22 verlaufen, vorzugsweise unter einem Winkel von 45°, schräg zur Längserstreckung der Klappen 33, 34, entsprechend verlaufen die mit diesen Zahnflanken zusammenwirkenden, vom Ring 30 abgewandten Zahnflanken der Verzahnungen 19, 20 schräg zur Längserstreckung der Schenkel 16, 17, vorzugsweise auch unter einem Winkel von 45° und damit parallel zu den genannten Zahnflanken der Gegenverzahnungen 21, 22. Damit können bei einem Zug am Ring 30 die genannten Zahnflanken aneinander vorbeigleiten, wobei die Klappen 33, 34 um die Filmscharniere 35, 36 nach innen schwenken und so eine Längsverschiebung des Klipses 23 in der Ausnehmung 18 im Sinne einer Verkürzung der wirksamen Länge des Kabelzuges 4 ermöglichen.

Die dem Ring 30 abgewandten Zahnflanken der Gegenverzahnungen 21, 22 und die damit zusammenwirkenden, dem Ring 30 zugewandten Zahnflanken der Verzahnungen 19, 20 erstrecken sich senkrecht zu den Klappen 33, 34 bzw. zu den Schenkeln 16, 17, so daß die ineinandergreifenden Verzahnungen 19, 20 und Gegenverzahnungen 21, 22 eine Relativbewegung des Klipses 23 in der Ausnehmung 18 im Sinne einer wirksamen Verlängerung des Kabelzuges 4 blockieren, wobei in den Filmscharnieren 35, 36 wirksame Rückstellkräfte die Klappen 33, 34 nach außen drücken und die Verzahnungen 19, 20 und Gegenverzahnungen 21, 22 ineinandergreifen lassen.

Eine weitere Sicherung gegen ein unbeabsichtigtes Verstellen des Klipses 23 ist durch eine Querstrebe 37 gegeben, die im vom Filmscharnier 35 entfernten Endbereich der einen Klappe 33 an deren Innenseite mittels eines Filmscharniers 38 schwenkbar befestigt ist und in eine Vertiefung 39 auf der Innenseite der anderen Klappe 34 einklipsbar ist, so daß ein Verschwenken der Klappen 33, 34 nach innen wirksam verhindert und das Ineinandergreifen der Verzahnungen 19, 20 und Gegenverzahnungen 21, 22 gewährleistet ist.

Eine Sicherung gegen ein Herausgleiten des Klipses 23 aus der Ausnehmung 18 nach oben ist durch ein T-Stück 40 gegeben, das vom Boden 26 des Klipses 23 nach unten hervorragt und zwei seitliche Vorsprünge 41, 42 der Schenkel 16, 17 untergreift. Ein Herausführen des T-Stücks 40 nach hinten ist möglich.

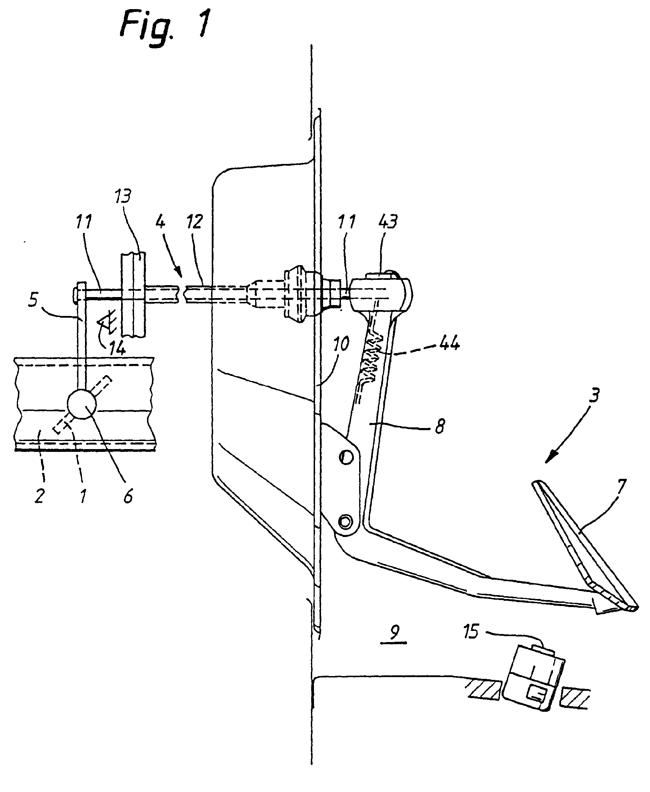

Eine andere Sicherung gegen ein Herausgleiten des Klipses 23 aus der Ausnehmung 18 ist aus Fig. 1 ersichtlich. Hier ragt eine am Klips 23 befestigte Lasche 43 seitlich aus der Ausnehmung 18 heraus. An ihr greift eine gleichzeitig als Rückzugfeder 44 für den Fahrhebel 8 dienende, schräg nach unten wirkende Feder an, so daß der Klips 23 in der Ausnehmung 18 niedergedrückt wird. Zur weiteren Sicherung kann die Unterseite der Lasche 43 mit einer Verzahnung versehen sein, die mit einer Verzahnung auf einer Oberkante eines Schenkels zusammenwirkt.

## Patentansprüche

1. Anordnung zur Einstellung der Vollaststellung einer der Verstellung einer Drosselklappe einer Brennkraftmaschine dienenden Übertragungseinrichtung, die Übertragungsglieder, u.a. einen Fahrhebel, einen Kabelzug oder ein Übertragungsgestänge und einen Betätigungshebel an der Drosselklappe umfaßt, wobei die Betätigungsbewegungen sowohl des Fahrhebels wie des Betätigungshebels durch jeweils einen Vollastanschlag begrenzt sind, mit einer an einem Übertragungsglied angebrachten Verzahnung, die bei der Einstellung relativ zu einer Raste längsverschiebbar und feststellbar ist,
**dadurch gekennzeichnet,**
daß das dem Übertragungsgestänge oder dem Kabelzug (4) zugewandte Ende des Fahrhebels (8) eine Ausnehmung (18) mit U-förmiger Begrenzung aufweist, die zwei Schenkel (16,17) umfaßt, von denen mindestens einer auf seiner Innenseite mit einer Verzahnung (19,20) versehen ist, und daß am fahrhebelseitigen Ende des Übertragungsgestänges oder des Kabelzuges (4) als Raste ein Klips (23) befestigt ist, der in der Ausnehmung (18) längsverschiebbar und mit mindestens einer Gegenverzahnung (21, 22) in die Verzahnung (19, 20) einrastend feststellbar angeordnet ist.

2. Anordnung nach Anspruch 1,
**dadurch gekennzeichnet,**
daß am Klips (23) ein Zugring (30) vorgesehen ist, über den durch manuelle Betätigung eine den Klips (23) in der Ausnehmung (18) längsverstellende Zugkraft auf den Klips (23) aufbringbar ist.

3. Anordnung nach Anspruch 1 oder 2,
**dadurch gekennzeichnet,**
daß die bei Zug durch den Zugring (30) belasteten Zahnflanken der Verzahnung (19, 20) und/oder der Gegenverzahnung (21, 22) schräg ausgebildet sind.

4. Anordnung nach einem der Ansprüche 1 bis 3,
**dadurch gekennzeichnet,**
daß in mindestens einer der beiden Seitenwände (24,25) eine Aussparung (31, 32) vorgesehen ist, in die eine über ein Filmscharnier (35, 36) schwenkbar an der Seitenwand (24, 25) befestigte Klappe (33, 34) eingesetzt ist, und daß die Gegenverzahnung (21, 22) auf der Außenseite der Klappe (33, 34) in deren dem Filmscharnier (35, 36) entfernten Bereich vorgesehen ist.

5. Anordnung nach Anspruch 4,
**dadurch gekennzeichnet,**
daß zwischen den beiden Klappen (33, 34) oder zwischen einer Klappe (33 oder 34) und einer gegenüberliegenden Seitenwand (25 oder 24) im Bereich der Gegenverzahnung(en) (21,22) eine Querstrebe (37) angeordnet ist, die auf der einen Seite über ein Filmscharnier (38) schwenkbar befestigt und auf der anderen Seite in eine Vertiefung (39) einklipsbar ist.

6. Anordnung nach einem der Ansprüche 1 bis 5,
**dadurch gekennzeichnet,**
daß ein T-Stück (40) vom Boden (26) des Klipses (23) nach unten hervorragt und zwei seitliche Vorsprünge (41, 42) der Schenkel (16,17) längsbeweglich untergreift.

7. Anordnung nach einem der Ansprüche 1 bis 5,
**dadurch gekennzeichnet,**
daß der Klips (23) durch eine eine Rückzugfeder (44) für den Fahrhebel (8) bildende Feder in die Ausnehmung (18) hinein belastet ist.

## Claims

1. An arrangement for adjusting the full load setting of a transmission means serving to adjust a throttle valve of an internal combustion engine and which comprises transmission means, inter alia an accelerator lever, a control cable or a transmission linkage and an actuating lever at the throttle valve, the actuation movements both of the accelerator lever and of the actuating lever being limited by respective full load abutments, with a tooth system mounted on a transmission member and which, during adjustment, can be longitudinally displaceable and arrestable in relation to a detent, characterised in that the end of the accelerator lever (8) which is towards the transmission linkage or the control cable (4) comprises a recess (18) with a U-shaped stop means comprising two arms (16, 17) of which at least one is provided on its inside with teeth (19, 20) and in that at the accelerator lever end of the transmission linkage or of the control cable (4) there is fixed as a detent a clip (23) disposed to be longitudinally displaceable in the recess (18) and has at least one mating tooth arrangement (21, 22) adapted to lock by engaging the teeth (19, 20).

2. An arrangement according to Claim 1, characterised in that there is on the clip (23) a pull ring (30) by which it is possible by manual actuation to apply a tractive force to the clip (23) to adjust it longitudinally in the recess (18).

3. An arrangement according to Claim 1 or 2, characterised in that those flanks of the teeth (19, 20) and/or of the mating teeth (21, 22) which are loaded by the pull ring (30) upon traction are of sloping construction.

4. An arrangement according to one of Claims 1 to 3, characterised in that in at least one of the two side walls (24, 25) there is a recess (31, 32) into which a flap valve (33, 34) fixed to the side wall (24, 25) and pivotable by means of a film hinge (35, 36) is inserted and in that the mating teeth (21, 22) are provided on the outside of the flap valve (33, 34) in the area thereof which is remote from the film hinge (35, 36).

5. An arrangement according to Claim 4, characterised in that between the two flap valves (33, 34) or between one flap valve (33 or 34) and an oppositely disposed side wall (25 or 24) there is in the region of the mating teeth (21, 22) a cross strut (37) which is fixed at one end by a film hinge (38) so that it is pivotable, while its other end can be clipped into a depression (39).

6. An arrangement according to one of Claims 1 to 5, characterised in that a T-piece (40) projects downwardly from the bottom (26) of the clip (23) and engages for longitudinal movement under two lateral projections (41, 42) on the arms (16, 17).

7. An arrangement according to one of Claims 1 to 5, characterised in that the clip (23) is biased by a spring constituting a return-pull spring (44) for the accelerator lever (8), to draw it into the recess (18).

## Revendications

1. Dispositif destiné à régler la position de pleine charge d'un dispositif de transmission servant à régler un clapet d'étranglement d'un moteur à combustion, qui comporte les organes de transmission, entre autres un levier d'accélérateur, un câble ou une tringlerie de transmission et un levier d'actionnement sur le clapet d'étranglement, les déplacements d'actionnement du levier d'accélérateur comme du levier d'actionnement étant limités par une butée de pleine charge, avec une denture appliquée sur un organe de transmission, qui lors du réglage peut être déplacée longitudinalement et bloquée par rapport à un cran d'arrêt, caractérisé en ce que l'extrémité du levier d'accélérateur (8), tournée vers la tringlerie de transmission ou vers le câble (4), présente un évidement (18) avec une délimitation en U qui comprend deux branches (16, 17) dont l'une au moins est pourvue sur son côté intérieur d'une denture (19, 20) et en ce qu'à l'extrémité, côté levier d'accélérateur, de la tringlerie de transmission ou du câble (4) il est fixé un clips (23) servant de cran d'arrêt, qui est déplaçable longitudinalement dans l'évidement (18) et qui peut être bloqué par engrènement dans la denture (19, 20), avec au moins une contre-denture (21, 22).

2. Dispositif selon la revendication 1, caractérisé en ce que sur le clips (23) il est prévu un anneau de traction (30), par lequel, par actionnement manuel, il est possible d'appliquer sur le clips (23) une force de traction déplaçant longitudinalement le clips (23) dans l'évidement (18).

3. Dispositif selon les revendications 1 ou 2, caractérisé en ce que les flancs des dents de la denture (19, 20) et/ou de la contre-denture (21, 22), sollicités en traction par l'anneau de traction (30), sont obliques.

4. Dispositif selon l'une des revendications 1 à 3, caractérisé en ce que dans au moins l'une des deux parois latérales (24, 25) il est prévu une découpe (31, 32) dans laquelle est inséré un clapet (33, 34) fixé pivotant sur la paroi latérale (24, 25), par une pellicule-charnière (35, 36) et en ce que la contre-denture (21, 22) est prévue sur le côté extérieur du clapet (33, 34), dans sa zone éloignée de la pellicule-charnière (35, 36).

5. Dispositif selon la revendication 4, caractérisé en ce qu'entre les deux clapets (33, 34) ou entre un clapet (33 ou 34) et une paroi latérale (25 ou 24) opposée, il est prévu dans la zone de la(des) contre-denture(s) (21, 22), une entretoise qui, sur un côté, est fixée pivotante par une pellicule-charnière (38) et, sur l'autre côté, peut être clipsée dans un creux (39).

6. Dispositif selon l'une des revendications 1 à 5, caractérisé en ce qu'une pièce en T (40) dépasse vers le bas, du fond (26) du clips (23) et passe en se déplaçant longitudinalement sous deux reliefs (41, 42) latéraux des branches (16, 17).

7. Dispositif selon l'une des revendications 1 à 5, caractérisé en ce qu'un ressort formant un ressort de rappel (44) pour le levier d'accélérateur (8) fait entrer le clips (23) dans l'évidement (18).
